(19) Europäisches Patentamt
European Patent Office
Office européen des brevets

(11) **EP 3 432 091 A1**

(12) **EUROPÄISCHE PATENTANMELDUNG**

(43) Veröffentlichungstag:
**23.01.2019   Patentblatt 2019/04**

(51) Int Cl.:
*G05B 13/04* (2006.01)     *G05B 15/02* (2006.01)

(21) Anmeldenummer: **17182047.5**

(22) Anmeldetag: **19.07.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Vogl, Stefanie**
  **94357 Konzell (DE)**
• **Grothmann, Ralph**
  **80796 München (DE)**

(54) **VERFAHREN UND STEUEREINRICHTUNG ZUM STEUERN EINES TECHNISCHEN SYSTEMS**

(57)    Zum Steuern eines technischen Systems (TS), insbesondere einer Windturbine wird eine zeitliche Abfolge von Betriebsparameterwerten (BP) des technischen Systems (TS) erfasst und zu einer trainierten Prädiktionseinrichtung (NN) übermittelt, die anhand der Abfolge Prädiktionswerte (PZ) prädiziert. Aus einem jeweiligen Prädiktionswert (PZ) und einem jeweiligen zeitlich korrespondierenden Betriebsparameterwert (BP) wird ein jeweiliges erstes Korrespondenzpaar (KP1) abgeleitet und eine empirische bivariate Verteilungsfunktion (EBC) der ersten Korrespondenzpaare (KP1) ermittelt. Weiterhin wird für einen aktuellen Prädiktionswert (PZA) eine Vielzahl von potentiellen Korrespondenzpaaren (KPP) generiert und anhand der ermittelten bivariaten Verteilungsfunktion (EBC) für die potentiellen Korrespondenzpaare (KPP) jeweils ein potentieller Betriebsparameterwert (BPP) ermittelt. Anhand der potentiellen Betriebsparameterwerte (BPP) wird ein korrigierter Prädiktionswert (PZC) ermittelt, der zum Steuern des technischen Systems (TS) ausgegeben wird.

FIG 5

EP 3 432 091 A1

**Beschreibung**

Bei der Steuerung komplexer technischer Systeme, wie zum Beispiel Windturbinen, Gasturbinen, Solarkraftwerken, Verbrennungskraftmaschinen, Fertigungsanlagen oder Stromnetzen ist es in der Regel wünschenswert, ein Verhalten, eine Wirkung und/oder eine Ausbeute des technischen Systems zumindest kurzfristig vorherzusagen, das heißt zu prädizieren, um die Steuerung des technischen Systems hinsichtlich vorgegebener Kriterien zu optimieren.

So kann zum Beispiel bei einer Windturbine eine Entwicklung der Windverhältnisse prädiziert werden, um eine günstige Einstellung von Rotorblättern zu antizipieren. Weiterhin kann beispielsweise eine Turbine dadurch überwacht werden, dass an der Turbine gemessene Betriebsparameter mit Werten verglichen werden, die für eine funktionsfähige Turbine unter den gleichen Arbeitsbedingungen vorhergesagt werden. Bei einer Abweichung können dann rechtzeitig geeignete Gegenmaßnahmen ergriffen werden. Darüber hinaus können Auswirkungen verschiedener Steuermaßnahmen prädiziert werden, um dann diejenige Steuermaßnahme tatsächlich anzuwenden, die ein Systemverhalten optimiert.

Zur Prädiktion von Betriebsparametern verwenden zeitgemäße Steuerungen häufig trainierbare Steuermodelle, die auf Techniken des maschinellen Lernens basieren. Derartige Prädiktionseinrichtungen, die beispielsweise mittels neuronaler Netze implementierbar sind, können insbesondere Zeitreihen von Betriebsparametern häufig mit verhältnismäßig geringem Prädiktionsfehler vorhersagen.

Zur Verbesserung einer Prädiktionsqualität wird in der Regel angestrebt, einen residualen Prädiktionsfehler, das heißt eine Differenz zwischen einem prädizierten und einem tatsächlich eintretenden Wert nach Möglichkeit zu verringern. Derartige residuale Fehler sind in der Regel nichtlinear von den prädizierten und den tatsächlich eintretenden Werten abhängig, so dass sie in der Regel schwierig zu modellieren sind.

Es ist bekannt, lineare Aspekte residualer Fehler durch Skalierung der Betriebsparameterwerte zu kompensieren. Eine solche Vorgehensweise ist jedoch insbesondere bei neuronalen Netzen häufig nicht sehr vorteilhaft, insofern lineare Abhängigkeiten durch das neuronale Netz in der Regel automatisch erkannt werden und ein residualer Fehler häufig hochgradig nichtlineare Abhängigkeiten aufweist.

Alternativ oder zusätzlich kann eine Häufigkeitsverteilung der Prädiktionswerte an eine Häufigkeitsverteilung der tatsächlich eintretenden Werte durch eine sogenannte "quantile mapping bias-correction" angepasst werden, um so eine etwaige systematische Verzerrung der Verteilung der Prädiktionswerte zumindest teilweise zu kompensieren. Die auf diese Weise korrigierten Prädiktionswerte sind jedoch durch Maximum und Minimum der tatsächlich eintretenden Werte beschränkt, was insbesondere bei einer Vorhersage von Zeitreihen mit stark schwankenden Werten nachteilig sein kann.

Es ist Aufgabe der vorliegenden Erfindung, ein Verfahren und eine Steuereinrichtung zum Steuern eines technischen Systems anzugeben, die eine genauere Prädiktion erlauben.

Gelöst wird die Aufgabe durch ein Verfahren mit den Merkmalen des Patentanspruchs 1, durch eine Steuereinrichtung mit den Merkmalen des Patentanspruchs 12, durch ein Computerprogrammprodukt mit den Merkmalen des Patentanspruchs 13 sowie durch ein computerlesbares Speichermedium mit den Merkmalen des Patentanspruchs 14.

Zum Steuern eines technischen Systems, insbesondere einer Windturbine, einer Gasturbine, einem Solarkraftwerk, einer Verbrennungskraftmaschine, eines Stromnetzes, einer Fertigungsanlage oder einer anderen Anlage wird eine zeitliche Abfolge von Betriebsparameterwerten des technischen Systems erfasst und zu einer trainierten Prädiktionseinrichtung übermittelt, die anhand der Abfolge Prädiktionswerte prädiziert. Aus einem jeweiligen Prädiktionswert und einem jeweiligen zeitlich korrespondierenden Betriebsparameterwert wird ein jeweiliges erstes Korrespondenzpaar abgeleitet und eine empirische bivariate Verteilungsfunktion der ersten Korrespondenzpaare ermittelt. Weiterhin wird für einen aktuellen Prädiktionswert eine Vielzahl von potentiellen Korrespondenzpaaren generiert und anhand der ermittelten bivariaten Verteilungsfunktion für die potentiellen Korrespondenzpaare jeweils ein potentieller Betriebsparameterwert ermittelt. Anhand der potentiellen Betriebsparameterwerte wird ein korrigierter Prädiktionswert ermittelt, der zum Steuern des technischen Systems ausgegeben wird.

Zum Ausführen des erfindungsgemäßen Verfahrens sind eine Steuereinrichtung, ein Computerprogrammprodukt sowie ein computerlesbares Speichermedium vorgesehen.

Das erfindungsgemäße Verfahren sowie die erfindungsgemäße Steuereinrichtung können beispielsweise mittels einem oder mehrerer Prozessoren, anwendungsspezifischen integrierten Schaltungen (ASIC), digitalen Signalprozessoren (DSP) und/oder sogenannten "Field Programmable Gate Arrays" (FPGA) ausgeführt bzw. implementiert werden.

Ein Vorteil der Erfindung ist darin zu sehen, dass mittels der bivariaten Verteilungsfunktion auch komplexe Korrelationen zwischen vorhergesagten Prädiktionswerten und tatsächlich eintretenden Betriebsparameterwerten modelliert werden können. Damit kann eine Prädiktionsgenauigkeit in der Regel erheblich gesteigert werden. Insbesondere ist ein jeweiliger korrigierter Prädiktionswert nicht a priori auf ein Intervall zwischen den Extremwerten früherer Betriebsparameterwerte eingeschränkt. Damit eignet sich die Erfindung insbesondere zur Vorhersage von Betriebsparametern mit größeren Schwankungen, wie z.B. den Windverhältnissen bei einer Windturbine. Darüber hinaus erfordert die Erfindung in der Regel nur verhältnismäßig geringe Rechenressourcen.

Anhand der korrigierten Prädiktionswerte kann das technische System in vorausschauender Weise gesteuert werden. Dabei kann ein Systemverhalten optimiert und ungünstigem Systemverhalten oft rechtzeitig gegengesteuert werden. Die korrigierten Prädiktionswerte können insbesondere zur Überwachung des technischen Systems, zur Beschädigungserkennung, zur Verschleißerkennung, zur Abstimmung eines Ressourcenbedarfs auf ein Ressourcenangebot und/oder für andere vorausschauende Steuer- oder Planungsmaßnahmen verwendet werden.

Vorteilhafte Ausführungsformen und Weiterbildungen der Erfindung sind in den abhängigen Ansprüchen angegeben.

Vorzugsweise kann die Prädiktionseinrichtung ein künstliches neuronales Netz, ein rekurrentes neuronales Netz, ein faltendes neuronales Netz, einen Autoencoder, eine Deep-Learning-Architektur, eine Support-Vector-Machine, ein datengetriebenes trainierbares Regressionsmodell, einen k-nächste-Nachbarn-Klassifikator, ein physikalisches Modell und/oder einen Entscheidungsbaum umfassen.

Vorteilhafterweise kann anhand der empirischen bivariaten Verteilungsfunktion eine diese approximierende numerische bivariate Verteilungsfunktion bereitgestellt werden. Die potentiellen Korrespondenzpaare werden dann jeweils der numerischen bivariaten Verteilungsfunktion zugeführt, und aus einem jeweiligen Rückgabewert der numerischen bivariaten Verteilungsfunktion wird ein jeweiliger potentieller Betriebsparameterwert abgeleitet.

Nach einer besonders vorteilhaften Ausführungsform der Erfindung kann als empirische bivariate Verteilungsfunktion eine empirische bivariate Copula-Verteilungsfunktion ermittelt werden. Eine bivariate Copula-Verteilungsfunktion, d.h. eine Copula-Verteilungsfunktion mit zwei Argumenten, kann eine stochastische Abhängigkeitsstruktur zwischen ihren beiden Argumenten im Prinzip vollständig abbilden und erlaubt somit ein gute Modellierung der Abhängigkeitsstruktur zwischen Prädiktionswerten und tatsächlich eintretenden Betriebsparameterwerten. Zudem kann eine empirische bivariate Copula-Verteilungsfunktion mit verhältnismäßig geringen Rechenressourcen ermittelt werden. Darüber hinaus skaliert die Ermittlung und Anwendung einer bivariaten Copula-Verteilungsfunktion in vorteilhafter Weise mit der Dimension der Betriebsparameterwerte.

Vorzugsweise kann eine bivariate Copula-Modellfunktion durch Parameterfitting an die empirische bivariate Verteilungsfunktion angepasst und als numerische bivariate Verteilungsfunktion bereitgestellt werden. Eine solche numerische Verteilungsfunktion lässt sich häufig schneller auswerten und flexibler anwenden.

Nach einer weiteren vorteilhaften Ausführungsform der Erfindung können eine erste univariate Verteilungsfunktion der Prädiktionswerte und eine zweite univariate Verteilungsfunktion der erfassten Betriebsparameterwerte ermittelt werden. Hiermit kann ein jeweiliges erstes Korrespondenzpaar aus einem anhand der ersten univariaten Verteilungsfunktion transformierten Prädiktionswert und einem anhand der zweiten univariaten Verteilungsfunktion transformierten Betriebsparameterwert gebildet werden. Durch die vorgenommenen Transformationen kann ein jeweiliger Wertebereich der Komponenten der ersten Korrespondenzpaare auf ein einheitliches Intervall normiert werden. Dies kann eine Analyse einer Abhängigkeitsstruktur der Komponenten erheblich erleichtern.

Weiterhin kann beim Ermitteln eines jeweiligen potentiellen Betriebsparameterwerts der jeweilige Rückgabewert der numerischen bivariaten Verteilungsfunktion durch eine zur zweiten univariaten Verteilungsfunktion inversen Funktion transformiert werden. Auf diese Weise können die Rückgabewerte auf einen Wertebereich der Betriebsparameter abgebildet werden. Nach einer vorteilhaften Ausführungsform der Erfindung kann die Prädiktionseinrichtung parallel zur Ermittlung der empirischen bivariaten Verteilungsfunktion trainiert oder weitertrainiert werden. Auf diese Weise kann die Prädiktionseinrichtung an z.B. verschleißbedingte Veränderungen des technischen Systems fortlaufend angepasst werden.

Weiterhin kann beim Ermitteln des korrigierten Prädiktionswerts ein Mittelwert und/oder ein Median der potentiellen Betriebsparameterwerte gebildet werden. Hierdurch kann eine statistische Verteilung der potentiellen Betriebsparameterwerte auf einen repräsentativen Wert abgebildet werden, der in der Regel eine genauere Vorhersage der Betriebsparameter erlaubt, als ein unkorrigierter Prädiktionswert.

Darüber hinaus kann eine statistische Streuung der potentiellen Betriebsparameterwerte ermittelt und als Unsicherheit des korrigierten Prädiktionswertes zum Steuern des technischen Systems ausgegeben werden. Auf diese Weise kann praktisch ohne nennenswerten Zusatzaufwand ein Maß für die Genauigkeit des korrigierten Prädiktionswerts ermittelt werden.

Ein Ausführungsbeispiel der Erfindung wird nachfolgend anhand der Zeichnung näher erläutert. Dabei zeigen jeweils in schematischer Darstellung:

Figur 1    eine Windturbine mit einer erfindungsgemäßen Steuereinrichtung,

Figur 2    eine erfindungsgemäße Steuereinrichtung in einer Trainingsphase,

Figur 3    ein Ablaufdiagramm eines erfindungsgemäßen Verfahrens,

Figur 4    die erfindungsgemäße Steuereinrichtung in einer Konfigurationsphase und

Figur 5     die erfindungsgemäße Steuereinrichtung in einer Steuerphase.

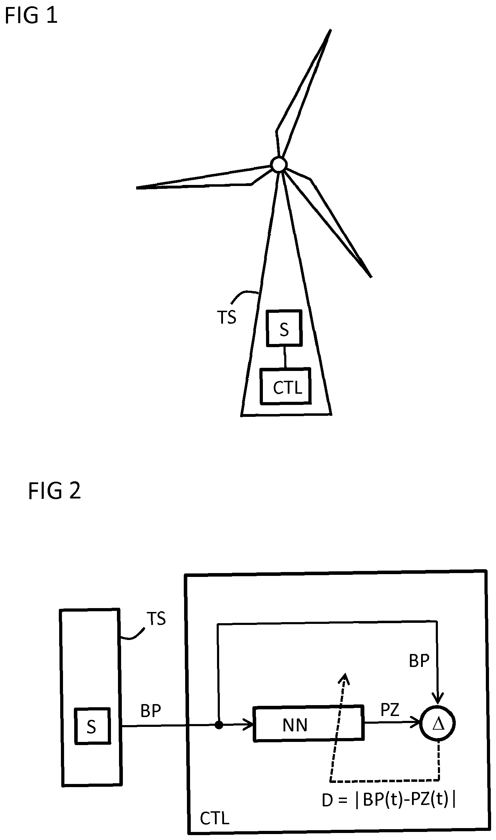

Figur 1 zeigt in schematischer Darstellung beispielhaft eine Windturbine als technisches System TS. Alternativ oder zusätzlich kann als technisches Systems TS auch eine Gasturbine, ein Solarkraftwerk, eine Verbrennungskraftmaschine, ein Stromnetz, eine Fertigungsanlage oder eine andere Anlage oder eine Kombination hiervon vorgesehen sein.

Die Windturbine TS verfügt über eine erfindungsgemäße Steuereinrichtung CTL, die als Teil des technischen Systems TS oder ganz oder teilweise extern zum technischen System TS implementiert sein kann. Die Steuereinrichtung CTL dient zum Steuern des technischen Systems TS. Unter einem Steuern des technischen Systems TS sei hierbei auch eine Ausgabe und Verwendung von steuerungsrelevanten, das heißt zum Steuern des technischen Systems TS beitragenden Daten und Steuersignalen verstanden. Derartige steuerungsrelevante Daten können insbesondere Prognosedaten, Analysedaten, Überwachungsdaten und/oder Klassifikationsdaten umfassen, die insbesondere zur Betriebsoptimierung, Überwachung oder Wartung des technischen Systems TS und/oder zur Verschleiß- oder Beschädigungserkennung verwendet werden können.

Die Windturbine TS verfügt weiterhin über mit der Steuereinrichtung CTL gekoppelte Sensoren S, die fortlaufend einen oder mehrere Betriebsparameter der Windturbine messen und zur Steuereinrichtung CTL übermitteln. Ein jeweiliger Sensor S kann hierbei auch als Softsensor implementiert sein. Neben den Sensordaten können durch die Steuereinrichtung CTL noch weitere Betriebsparameter aus anderen Datenquellen des technischen Systems TS oder aus externen Datenquellen erfasst werden.

Als Betriebsparameter können hier und im Folgenden insbesondere physikalische, regelungstechnische, wirkungstechnische und/oder bauartbedingte Betriebsgrößen, Eigenschaften, Leistungsdaten, Wirkungsdaten, Zustandsdaten, Systemdaten, Vorgabewerte, Steuerdaten, Sensordaten, Messwerte, Umgebungsdaten, Überwachungsdaten, Prognosedaten, Analysedaten und/oder andere im Betrieb des technischen Systems TS anfallende und/oder einen Betriebszustand des technischen Systems TS beschreibende Daten erfasst werden. Zum Beispiel Daten über Temperatur, Druck, Emissionen, Vibrationen, Schwingungszustände, Ressourcenverbrauch etc. Speziell bei einer Windturbine können die Betriebsparameter eine Windgeschwindigkeit, eine Windrichtung, eine Turbinenleistung, eine Rotationsgeschwindigkeit und/oder eine Beschleunigung der Triebwerksgondel betreffen.

Mehrere oder alle der erfassten Betriebsparameter können vorzugsweise zu einem Betriebsparametervektor zusammengefasst werden. Der Begriff Betriebsparameter soll im Folgenden auch derartige Betriebsparametervektoren umfassen. Ein jeweiliger Betriebsparameterwert kann demnach auch einen Vektor von Betriebsparameterwerten repräsentieren.

Figur 2 zeigt in schematischer Darstellung eine erfindungsgemäße Steuereinrichtung CTL in einer Trainingsphase. Die Steuereinrichtung CTL ist an ein technisches System TS gekoppelt, das über Sensoren S verfügt. Das technische System TS und die Sensoren S können wie oben beschrieben ausgestaltet sein.

Das technische System TS übermittelt eine zeitliche Abfolge von Betriebsparameterwerten BP zur Steuereinrichtung CTL. Wie oben bereits erwähnt, können die Betriebsparameterwerte BP gegebenenfalls vektorwertig sein. Die Steuereinrichtung CTL verfügt über eine Prädiktionseinrichtung, die mittels eines künstlichen neuronalen Netzes NN implementiert ist. Die Abfolge von Betriebsparameterwerten BP wird dem neuronalen Netz NN zugeführt. Das neuronale Netz NN ist datengetrieben trainierbar und weist eine Trainingsstruktur auf, die sich während eines Trainings ausbildet.

Unter einem Training sei allgemein eine Optimierung einer Abbildung von Eingangsparametern eines parametrisierten Systemmodells, zum Beispiel eines neuronalen Netzes, auf einen oder mehrere Zielparameter verstanden. Diese Abbildung wird nach vorgegebenen, gelernten und/oder zu lernenden Kriterien während einer Trainingsphase optimiert. Als Kriterien können insbesondere bei Prädiktionsmodellen einer Prädiktionseinrichtung ein Prädiktionsfehler, ein Klassifikationsfehler, ein Analysefehler und/oder ein Simulationsfehler oder komplementär dazu, eine Prädiktionsgüte, eine Klassifikationsgüte, eine Analysegüte und/oder eine Simulationsgüte herangezogen werden. Eine Trainingsstruktur kann zum Beispiel eine Vernetzungsstruktur von Neuronen eines neuronalen Netzes und/oder Gewichte von Verbindungen zwischen den Neuronen umfassen, die durch das Training so ausgebildet werden, dass die vorgegebenen Kriterien möglichst gut erfüllt werden.

Erfindungsgemäß wird durch das Training des neuronalen Netzes NN angestrebt, dass dieses aus der Abfolge der Betriebsparameterwerte BP fortlaufend einen zukünftigen Betriebsparameterwert als Prädiktionswert PZ möglichst genau vorhersagt. Zu diesem Zweck werden die vom neuronalen Netz NN ausgegebenen Prädiktionswerte PZ(t), die für einen jeweiligen Zeitpunkt t vorausgesagt sind, mit dazu jeweils zeitlich korrespondierenden, das heißt jeweils auf den gleichen Zeitpunkt t bezogenen, tatsächlich erfassten Betriebsparameterwerten BP(t) verglichen. Hierbei ist ein jeweiliger, auf einen Zeitpunkt t bezogener Prädiktionswert PZ(t) solange zwischenzuspeichern, bis der jeweilige auf denselben Zeitpunkt t bezogene Betriebsparameterwert BP(t) tatsächlich erfasst und verfügbar ist. Im Rahmen des Vergleichs wird ein Abstand D zwischen den Prädiktionswerten PZ(t) und den zeitlich korrespondierenden, tatsächlich erfassten Betriebsparameterwerten BP(t) gebildet. Der Abstand D repräsentiert einen Prädiktionsfehler des neuronalen Netzes NN, der durch das Training zu minimieren ist.

Der Abstand D wird zum neuronalen Netz NN zurückgeführt, das - wie in Figur 2 durch einen strichlierten Pfeil angedeutet - darauf trainiert wird, den Abstand D zu minimieren, das heißt den Betriebsparameter möglichst genau zu prädizieren.

Zum Training des neuronalen Netzes NN kann eine Vielzahl von Standard-Trainingsverfahren für neuronale Netze, insbesondere des überwachten Lernens eingesetzt werden. Der zu minimierende Abstand D kann dabei durch eine geeignete Kostenfunktion repräsentiert werden. Zur Minimierung des Abstandes D kann insbesondere eine Gradientenabstiegsmethode verwendet werden.

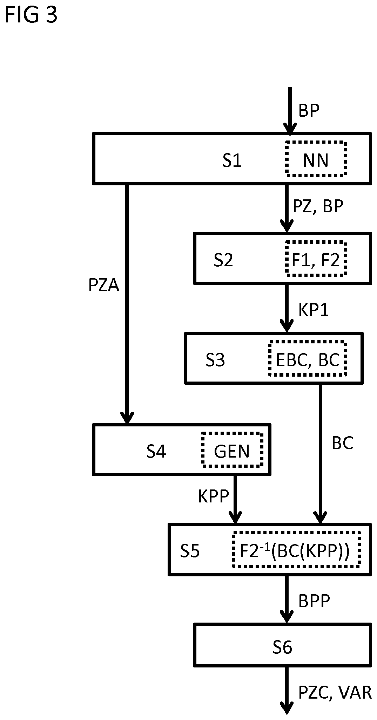

Figur 3 zeigt ein Ablaufdiagramm eines erfindungsgemäßen Verfahrens mit Verfahrensabschnitten S1, ..., S6 in schematischer Darstellung.

In Verfahrensabschnitt S1 werden aus einer zeitlichen Abfolge von Betriebsparameterwerten BP durch eine trainierte oder vortrainierte Prädiktionseinrichtung, hier das neuronale Netz NN, eine zeitliche Abfolge von Prädiktionswerten PZ prädiziert.

In Verfahrensabschnitt S2 werden anhand der Abfolge der Prädiktionswerte PZ und der Abfolge der Betriebsparameterwerte BP stochastische univariate Verteilungsfunktionen, das heißt Verteilungsfunktionen einer einzigen, ggf. vektorwertigen Variablen, empirisch ermittelt; und zwar eine erste univariate Verteilungsfunktion F1 der Prädiktionswerte PZ und eine zweite univariate Verteilungsfunktion F2 der erfassten Betriebsparameterwerte BP. Die univariaten Verteilungsfunktionen F1 und F2 können beispielsweise aus Häufigkeitsverteilungen der Prädiktionswerte PZ und der Betriebsparameterwerte BP ermittelt werden. Derartige univariate Verteilungsfunktionen, hier F1 und F2, werden häufig auch als kumulierte Verteilungsfunktionen bezeichnet.

Weiterhin werden die Prädiktionswerte PZ durch die ermittelte erste univariate Verteilungsfunktion F1 transformiert und die Betriebsparameterwerte BP durch die ermittelte zweite univariate Verteilungsfunktion F2 transformiert. Für einen jeweiligen Zeitpunkt t wird aus einem für diesen Zeitpunkt vorhergesagten Prädiktionswert PZ(t) und einem auf diesen Zeitpunkt t bezogenen Betriebsparameterwert BP(t) ein jeweiliges erstes Korrespondenzpaar KP1(t) abgeleitet. Das erste Korrespondenzpaar KP1(t) umfasst hierbei den transformierten Prädiktionswert F1(PZ(t)) sowie den transformierten Betriebsparameterwert F2(BP(t)), das heißt KP1(t) = (F1(PZ(t)), F2(BP(t))). Die zeitliche Abfolge der ersten Korrespondenzpaare KP1(t) wird im Folgenden auch als KP1 bezeichnet.

In Verfahrensabschnitt S3 wird eine bivariate stochastische Verteilungsfunktion der ersten Korrespondenzpaare KP1 ermittelt. Als bivariate Verteilungsfunktion wird vorzugsweise eine bivariate Copula-Verteilungsfunktion verwendet, das heißt eine Copula-Verteilungsfunktion zweier Variabler, hier der beiden Komponenten F1(PZ(t)) und F2(BP(t)) eines jeweiligen ersten Korrespondenzpaars KP1(t). Die Variablen können hierbei ggf. vektorwertig sein. Eine bivariate Copula-Verteilungsfunktion bildet eine stochastische Abhängigkeitsstruktur zwischen den beiden Variablen im Prinzip vollständig ab, während die univariaten Verteilungsfunktionen F1 und F2 eine stochastische Randverteilung der Eingangsgrößen PZ und BP abbilden. In diesem Zusammenhang werden F1 und F2 auch als Randverteilungsfunktionen bezeichnet.

Durch die Verwendung der Verteilungsfunktionen F1 und F2 einerseits und einer bivariaten Copula-Verteilungsfunktion andererseits können eine Modellierung der Randverteilungen und eine Modellierung der Abhängigkeitsstruktur zwischen Prädiktionswerten und tatsächlich eintretenden Betriebsparameterwerten voneinander separiert werden. Dies lässt sich erfindungsgemäß zu einer erheblichen Verbesserung der Prädiktionsgüte nutzen.

Im vorliegenden Ausführungsbeispiel wird anhand der ersten Korrespondenzpaare KP1 eine sogenannte empirische bivariate Copula-Verteilungsfunktion EBC der ersten Korrespondenzpaare KP1 ermittelt. Vorzugsweise wird an die ermittelte empirische bivariate Copula-Verteilungsfunktion EBC eine bivariate Copula-Modellfunktion BC, zum Beispiel durch Parameterfitting angepasst. Als bivariate Copula-Modellfunktion BC kann zum Beispiel eine Gumbel-Hougaard-Copula verwendet werden.

Die angepasste bivariate Copula-Modellfunktion BC wird zur Ausführung der nachfolgenden Verfahrensabschnitte als numerische bivariate Copula-Verteilungsfunktion bereitgestellt. Vorzugsweise kann parallel zur Ermittlung der Copula-Verteilungsfunktionen EBC und/oder BC das neuronale Netz NN weitertrainiert werden.

In Verfahrensabschnitt S4 wird ein aktueller Prädiktionswert PZA, das heißt ein zu einem aktuellen Zeitpunkt vom neuronalen Netz NN für einen zukünftigen Zeitpunkt prädizierter Prädiktionswert empfangen. Dieser soll erfindungsgemäß modifiziert werden, um eine genauere Vorhersage zu erhalten. Zu diesem Zweck werden für diesen aktuellen Prädiktionswert PZA eine Vielzahl von potenziellen Korrespondenzpaaren KPP durch einen Generator GEN generiert. Hierfür generiert der Generator GEN eine Vielzahl von Sampling-Werten SW(N) in einem Wertebereich der zweiten univariaten Verteilungsfunktion F2. Der Index N indiziert hierbei die Vielzahl von generierten Sampling-Werten. Vorzugsweise werden die Sampling-Werte SW(N) mittels eines Zufallsgenerators als im Wertebereich von F2 gleichverteilte Werte generiert. Alternativ oder zusätzlich können eine Vielzahl von möglichen oder virtuellen Betriebsparameterwerten BPGEN mit vorgegebener Häufigkeitsverteilung generiert werden, die dann durch F2 transformiert werden, sodass SW(N) = F2(BPGEN(N)).

Somit werden zum gleichen aktuellen Prädiktionswert PZA eine Vielzahl potenzieller Korrespondenzpaare gemäß KPP(N) = (F1(PZA), SW(N)) gebildet.

In Verfahrensabschnitt S5 werden die generierten potenziellen Korrespondenzpaare KPP der angepassten bivariaten Copula-Modellfunktion BC zugeführt, das heißt die angepasste bivariate Copula-Modellfunktion BC wird mit einem jeweiligen potenziellen Korrespondenzpaar KPP(N) als Argumentpaar aufgerufen. Die jeweiligen Rückgabewerte BC(KPP(N)) dieser Aufrufe werden durch eine zur zweiten univariaten Verteilungsfunktion F2 inversen Funktion $F2^{-1}$ transformiert, um jeweils einen potenziellen Betriebsparameterwert BPP(N) zu erhalten. Insgesamt ergibt sich also BPP(N) = $F2^{-1}$ (BC(F1(PZA), SW(N))).

Insofern die angepasste bivariate Copula-Modellfunktion BC für eine Vielzahl von Sampling-Werten SW(N), aber zu gleichem aktuellen Prädiktionswert PZA ausgewertet wird, spricht man auch von einer bedingten Copula-Verteilungsfunktion. Eine solche bedingte Copula-Verteilungsfunktion kann auch durch Differenzieren der bivariaten Copula-Verteilungsfunktion nach ihrem ersten Argument ermittelt werden.

In Verfahrensabschnitt S6 werden ein Mittelwert und/oder ein Median, sowie eine statistische Streuung VAR der potenziellen Betriebsparameterwerte BPP ermittelt. Als statistische Streuung VAR kann zum Beispiel eine Varianz oder Standardabweichung der potenziellen Betriebsparameterwerte BPP ermittelt werden.

Der berechnete Mittelwert beziehungsweise Median wird als korrigierter Prädiktionswert PZC und die statistische Streuung VAR als Unsicherheit, das heißt als Maß für eine Prädiktionsgenauigkeit des korrigierten Prädiktionswertes PZC zum Steuern des technischen Systems TS ausgegeben.

Die Verfahrensabschnitte S4, S5 und S6 werden vorzugsweise für jeden fortlaufend vom neuronalem Netz ermittelten aktuellen Prädiktionswert PZA durchlaufen, um fortlaufend einen korrigierten Prädiktionswert PZC vorherzusagen.

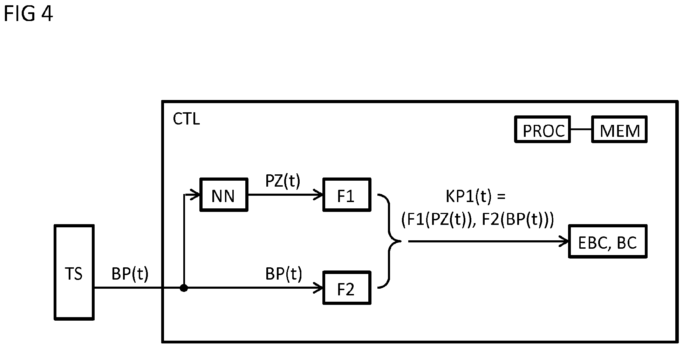

Figur 4 zeigt in schematischer Darstellung die erfindungsgemäße Steuerungseinrichtung CTL in einer Konfigurationsphase beim Ermitteln der empirischen bivariaten Copula-Verteilungsfunktion EBC und der bivariaten Copula-Modellfunktion BC. Insofern in Figur 4 die gleichen Bezugszeichen wie in den vorangegangenen Figurenbeschreibungen verwendet werden, bezeichnen diese Bezugszeichen die gleichen Entitäten und sind wie oben beschrieben implementiert.

Die Steuereinrichtung CTL verfügt über einen oder mehrere Prozessoren PROC zum Ausführen aller Verfahrensschritte der Steuereinrichtung CTL sowie über einen oder mehrere mit dem Prozessor PROC gekoppelte Speicher MEM zum Speichern der von der Steuereinrichtung CTL zu verarbeitenden Daten.

Die Steuereinrichtung CTL empfängt vom technischen System TS eine zeitliche Abfolge von Betriebsparameterwerten BP(t), die fortlaufend erfasst und verarbeitet werden. Die Betriebsparameterwerte BP(t) sind jeweils auf einen Zeitpunkt t bezogen bzw. durch diesen indiziert. Die Zeitpunkte t können beispielsweise einen Abstand von ca. einer Sekunde haben. In der Praxis wird beispielsweise ein Verhalten einer Windturbine durch einen Betriebsparameterverlauf in einem Zeitfenster von der Größenordnung von einigen Minuten, typischerweise ca. 2 Minuten im Wesentlichen bestimmt. Dies bedeutet, dass bei einer Prädiktion ein oder mehrere hundert Zeitreihenpunkte der Betriebsparameterwerte BP(t) auszuwerten sind.

Die Abfolge der Betriebsparameterwerte BP(t) wird dem trainierten neuronalem Netz NN der Steuereinrichtung CTL zugeführt, das daraus eine zeitliche Abfolge von Prädiktionswerten PZ(t) vorhersagt. Wie oben bereits erwähnt, gibt der Zeitpunkt bzw. Zeitindex t einen jeweiligen Zeitpunkt an, an dem der Betriebsparameterwert BP(t) aufgetreten ist, bzw. für den der Prädiktionswert PZ(t) vorhergesagt wurde.

Anhand der Prädiktionswerte PZ(t) und der Betriebsparameterwerte BP(t) werden die erste univariate Verteilungsfunktion F1 der Prädiktionswerte sowie die zweite univariate Verteilungsfunktion F2 der Betriebsparameterwerte ermittelt. Durch die ermittelte erste univariate Verteilungsfunktion F1 werden die Prädiktionswerte PZ(t) transformiert und durch die zweite univariate Verteilungsfunktion F2 die Betriebsparameterwerte BP(t). Aus den transformierten Werten wird eine zeitliche Abfolge von ersten Korrespondenzpaaren KP1(t) aus zeitlich auf den gleichen Zeitpunkt t bezogenen Werten abgeleitet gemäß KP1(t) = (F1(PZ(t)), F2(BP(t))).

Aus den ersten Korrespondenzpaaren KP1(t) wird, wie oben beschrieben, die empirische bivariate Copula-Verteilungsfunktion EBC der ersten Korrespondenzpaare ermittelt. Aus der ermittelten empirischen bivariaten Copula-Verteilungsfunktion EBC wird die bivariate Copula-Modellfunktion BC abgeleitet und als numerische bivariate Copula-Verteilungsfunktion bereitgestellt.

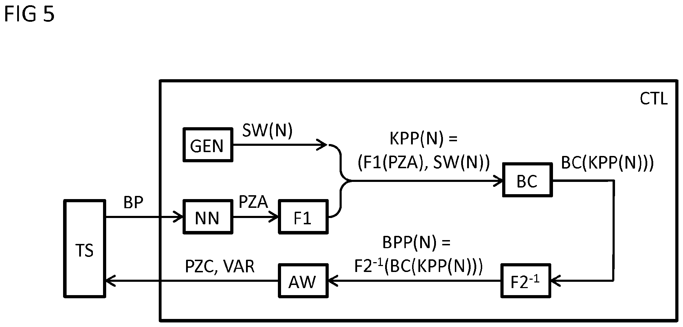

Figur 5 zeigt in schematischer Darstellung die erfindungsgemäße Steuereinrichtung CTL in einer Steuerphase beim Steuern des technischen Systems TS. Insofern in Figur 5 die gleichen Bezugszeichen wie in den vorangegangenen Figurenbeschreibungen verwendet werden, bezeichnen diese Bezugszeichen die gleichen Entitäten und sind wie oben beschrieben implementiert. Aus Übersichtlichkeitsgründen wurde der Zeitindex t in Figur 5 weggelassen.

Die Steuereinrichtung CTL empfängt vom technischen System TS eine zeitliche Abfolge der Betriebsparameterwerte BP, die dem trainierten neuronalem Netz NN der Steuereinrichtung CTL zugeführt werden. Das trainierte neuronale Netz NN prädiziert aus den zugeführten Betriebsparameterwerten BP einen aktuellen Prädiktionswert PZA für einen zukünftigen Zeitpunkt. Der aktuelle Prädiktionswert PZA wird der in der Konfigurationsphase ermittelten, ersten univariaten Verteilungsfunktion F1 zugeführt.

Die Steuereinrichtung CTL verfügt weiterhin über einen vorzugsweise zufallsbasierten Generator GEN zum Generieren einer Vielzahl von potenziellen Korrespondenzpaaren KPP für den jeweiligen aktuellen Prädiktionswert PZA.

Zu diesem Zweck generiert der Generator GEN eine Vielzahl von vorzugsweise zufallsbasierten Sampling-Werten SW(N) im Wertebereich der zweiten univariaten Verteilungsfunktion F2. Wie oben bereits erwähnt, indiziert N hierbei die Vielzahl der generierten Sampling-Werte SW(N). Aus der Vielzahl von Sampling-Werten SW(N) und dem durch F1 transformierten aktuellen Prädiktionswert werden die potenziellen Korrespondenzpaare KPP generiert

$$\text{gemäß KPP(N)} = \text{(F1(PZA)), SW(N)).}$$

Die potenziellen Korrespondenzpaare KPP(N) werden der in der Konfigurationsphase ermittelten bivariaten Copula-Modellfunktion BC zugeführt. Die bivariate Copula-Modellfunktion BC wird dabei mit einem jeweiligen potenziellen Korrespondenzpaar KPP(N) als Argument aufgerufen. Die Rückgabewerte BC(KPP(N)) werden der zur zweiten univariaten Verteilungsfunktion F2 inversen Funktion F2$^{-1}$ zugeführt und durch diese transformiert, um eine Vielzahl von potenziellen Betriebsparameterwerten BPP zu erhalten gemäß

$$\text{BPP(N)} = \text{F2}^{-1}\text{(BC(F1(PZA), SW(N))).}$$

Die so ermittelten potenziellen Betriebsparameterwerte BPP geben eine durch den aktuellen Prädiktionswert PZA bedingte statistische Verteilung der tatsächlichen Betriebsparameterwerte realistisch wieder. Durch statistische Auswertung der potenziellen Betriebsparameterwerte BPP kann somit der aktuelle Prädiktionswert PZA korrigiert werden, und es kann ein Maß für die Prädiktionsgenauigkeit abgeleitet werden.

Zu diesem Zweck werden die potenziellen Betriebsparameterwerte BPP(N) zu einem Auswertemodul AW der Steuereinrichtung CTL übermittelt. Das Auswertemodul AW ermittelt einen Mittelwert und/oder einen Median der potenziellen Betriebsparameterwerte BPP(N) als korrigierten Prädiktionswert PZC sowie die statistische Streuung VAR der potenziellen Betriebsparameterwerte BPP(N) wie oben beschrieben. Der korrigierte Prädiktionswert PZC sowie die statistische Steuerung VAR werden zum technischen System TS zu dessen Steuerung übermittelt.

Die Trainingsphase, Konfigurationsphase und Steuerphase der Steuereinrichtung CTL können auch zumindest teilweise parallel ablaufen, wobei das neuronale Netz NN fortlaufend anhand erfasster Betriebsparameterwerte weiter trainiert und/oder die Verteilungsfunktionen F1, F2, EBC und/oder BC fortlaufend an aktuell erfasste Betriebsparameterwerte angepasst werden.

Der korrigierte Prädiktionswert PCZ liefert in der Regel eine erheblich genauere Vorhersage der Betriebsparameter als die unkorrigierten Prädiktionswerte PZ bzw. PZA. Darüber hinaus erlaubt es die Erfindung, praktisch ohne nennenswerten Zusatzaufwand mit der statistischen Streuung VAR ein Maß für die Genauigkeit des korrigierten Prädiktionswerts PZC zu erhalten.

Der korrigierte Prädiktionswert PZC kann zusammen mit der statistischen Streuung VAR in vorteilhafter Weise zum vorausschauenden und präzisen Steuern des technischen Systems TS, zur Überwachung des technischen Systems TS, zur vorzeitigen Beschädigungserkennung, zur Prognose eines Ressourcenbedarfs und/oder zu anderen vorausschauenden Steuermaßnahmen verwendet werden.

**Patentansprüche**

1.  Verfahren zum Steuern eines technischen Systems, wobei

a) eine zeitliche Abfolge von Betriebsparameterwerten (BP) des technischen Systems (TS) erfasst wird,
b) die Abfolge zu einer trainierten Prädiktionseinrichtung (NN) übermittelt wird, die anhand der Abfolge Prädiktionswerte (PZ) prädiziert,
c) aus einem jeweiligen Prädiktionswert (PZ) und einem jeweiligen zeitlich korrespondierenden Betriebsparameterwert (BP) ein jeweiliges erstes Korrespondenzpaar (KP1) abgeleitet wird,
d) eine empirische bivariate Verteilungsfunktion (EBC) der ersten Korrespondenzpaare (KP1) ermittelt wird,
e) für einen aktuellen Prädiktionswert (PZA) eine Vielzahl von potenziellen Korrespondenzpaaren (KPP) generiert wird,
f) anhand der ermittelten bivariaten Verteilungsfunktion (EBC) für die potenziellen Korrespondenzpaare (KPP) jeweils ein potenzieller Betriebsparameterwert (BPP) ermittelt wird,
g) anhand der potenziellen Betriebsparameterwerte (BPP) ein korrigierter Prädiktionswert (PZC) ermittelt wird, und

h) der korrigierte Prädiktionswert (PZC) zum Steuern des technischen Systems (TS) ausgegeben wird.

2. Verfahren nach Anspruch 1, **dadurch gekennzeichnet,**
   **dass** das technische System (TS) eine Windturbine, eine Gasturbine, ein Solarkraftwerk, eine Verbrennungskraftmaschine, eine Fertigungsanlage oder ein Stromnetz umfasst.

3. Verfahren nach einem der vorhergehenden Ansprüche, **dadurch gekennzeichnet,**
   **dass** die Prädiktionseinrichtung (NN) ein künstliches neuronales Netz, ein rekurrentes neuronales Netz, ein faltendes neuronales Netz, einen Autoencoder, eine Deep-Learning-Architektur, eine Support-Vector-Machine, ein datengetriebenes trainierbares Regressionsmodell, einen k-nächste-Nachbarn-Klassifikator, ein physikalisches Modell und/oder einen Entscheidungsbaum umfasst.

4. Verfahren nach einem der vorhergehenden Ansprüche, **dadurch gekennzeichnet,**
   **dass** anhand der empirischen bivariaten Verteilungsfunktion (EBC) eine diese approximierende numerische bivariate Verteilungsfunktion (BC) bereitgestellt wird,
   **dass** die potentiellen Korrespondenzpaare (KPP) jeweils der numerischen bivariaten Verteilungsfunktion (BC) zugeführt werden, und
   **dass** aus einem jeweiligen Rückgabewert (BC(KPP)) der numerischen bivariaten Verteilungsfunktion (BC) ein jeweiliger potentieller Betriebsparameterwert (BPP) abgeleitet wird.

5. Verfahren nach einem der vorhergehenden Ansprüche, **dadurch gekennzeichnet,**
   **dass** als empirische bivariate Verteilungsfunktion eine empirische bivariate Copula-Verteilungsfunktion (EBC) ermittelt wird.

6. Verfahren nach einem der vorhergehenden Ansprüche, **dadurch gekennzeichnet,**
   **dass** eine bivariate Copula-Modellfunktion (BC) durch Parameterfitting an die empirische bivariate Verteilungsfunktion (EBC) angepasst und als numerische bivariate Verteilungsfunktion bereitgestellt wird.

7. Verfahren nach einem der vorhergehenden Ansprüche, **dadurch gekennzeichnet,**
   **dass** eine erste univariate Verteilungsfunktion (F1) der Prädiktionswerte (PZ) und eine zweite univariate Verteilungsfunktion (F2) der erfassten Betriebsparameterwerte (BP) ermittelt werden, und
   **dass** ein jeweiliges erstes Korrespondenzpaar (KP1) aus einem anhand der ersten univariaten Verteilungsfunktion (F1) transformierten Prädiktionswert (PZ) und einem anhand der zweiten univariaten Verteilungsfunktion (F2) transformierten Betriebsparameterwert (BP) gebildet wird.

8. Verfahren nach Anspruch 4 und 7, **dadurch gekennzeichnet, dass** beim Ermitteln eines jeweiligen potentiellen Betriebsparameterwerts (BPP) der jeweilige Rückgabewert (BC(KPP)) der numerischen bivariaten Verteilungsfunktion (BC) durch eine zur zweiten univariaten Verteilungsfunktion (F2) inversen Funktion (F2$^{-1}$) transformiert wird.

9. Verfahren nach einem der vorhergehenden Ansprüche, **dadurch gekennzeichnet,**
   **dass** die Prädiktionseinrichtung (NN) parallel zur Ermittlung der empirischen bivariaten Verteilungsfunktion (EBC) trainiert wird.

10. Verfahren nach einem der vorhergehenden Ansprüche, **dadurch gekennzeichnet,**
    **dass** beim Ermitteln des korrigierten Prädiktionswerts (PZC) ein Mittelwert und/oder ein Median der potentiellen Betriebsparameterwerte (BPP) gebildet wird.

11. Verfahren nach einem der vorhergehenden Ansprüche, **dadurch gekennzeichnet,**
    **dass** eine statistische Streuung (VAR) der potentiellen Betriebsparameterwerte (BPP) ermittelt und als Unsicherheit des korrigierten Prädiktionswertes (PZC) zum Steuern des technischen Systems (TS) ausgegeben wird.

12. Steuereinrichtung (CTL) zum Steuern eines technischen Systems (TS) eingerichtet zum Ausführen eines Verfahrens nach einem der vorhergehenden Ansprüche.

13. Computerprogrammprodukt eingerichtet zum Ausführen eines Verfahrens nach einem der Ansprüche 1 bis 11.

14. Computerlesbares Speichermedium mit einem Computerprogrammprodukt nach Anspruch 13.

FIG 1

FIG 2

FIG 3

BP

| S1 | NN |

PZ, BP

| S2 | F1, F2 |

KP1

| S3 | EBC, BC |

PZA

BC

| S4 | GEN |

KPP

| S5 | F2⁻¹(BC(KPP)) |

$$S5 \quad F2^{-1}(BC(KPP))$$

BPP

| S6 |

PZC, VAR

FIG 4

CTL

PROC — MEM

NN → PZ(t) → F1

TS → BP(t) → BP(t) → F2

KP1(t) = (F1(PZ(t)), F2(BP(t)))

EBC, BC

FIG 5

CTL

GEN → SW(N)

KPP(N) = (F1(PZA), SW(N))

BC → BC(KPP(N)))

TS → BP → NN → PZA → F1

BPP(N) = F2⁻¹(BC(KPP(N)))

PZC, VAR ← AW ← F2⁻¹

Europäisches Patentamt
European Patent Office
Office européen des brevets

# EUROPÄISCHER RECHERCHENBERICHT

**Nummer der Anmeldung**

EP 17 18 2047

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Min-Jae Kang ET AL: "Neural Network Based Pitch Controller", Proceedings of the World Congress on Electrical Engineering and Computer Systems and Science, 13. Juli 2015 (2015-07-13), Seiten 140-1, XP055441190, Gefunden im Internet: URL:https://avestia.com/EECSS2015_Proceedings/files/papers/EEE140.pdf * das ganze Dokument * ----- | 1-14 | INV. G05B13/04 G05B15/02 |
| A | CHENG JIANGNAN ET AL: "Evaluating the spatial correlations of multi-area load forecasting errors", 2016 INTERNATIONAL CONFERENCE ON PROBABILISTIC METHODS APPLIED TO POWER SYSTEMS (PMAPS), IEEE, 16. Oktober 2016 (2016-10-16), Seiten 1-6, XP033015273, DOI: 10.1109/PMAPS.2016.7764153 [gefunden am 2016-12-01] * Zusammenfassung * * Seite 1, rechte Spalte, Absatz 3 - Seite 4, linke Spalte, letzter Absatz * ----- | 1-14 | |
| A | Kalyan Veeramachaneni ET AL: "Copula Graphical Models for Wind Resource Estimation", , 1. Januar 2015 (2015-01-01), Seiten 2464-2654, XP055441195, Gefunden im Internet: URL:https://www.ijcai.org/Proceedings/15/Papers/375.pdf [gefunden am 2018-01-16] * Zusammenfassung * * sections1-4 * ----- -/-- | 1-14 | **RECHERCHIERTE SACHGEBIETE (IPC)** G05B F03D |

Der vorliegende Recherchenbericht wurde für alle Patentansprüche erstellt

| Recherchenort | Abschlußdatum der Recherche | Prüfer |
|---|---|---|
| Den Haag | 16. Januar 2018 | Kielhöfer, Patrick |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

Nummer der Anmeldung

EP 17 18 2047

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | S. VOGL ET AL: "Copula-based assimilation of radar and gauge information to derive bias-corrected precipitation fields", HYDROLOGY AND EARTH SYSTEM SCIENCES, Bd. 16, Nr. 7, 1. Januar 2012 (2012-01-01) , Seiten 2311-2328, XP055441199, DOI: 10.5194/hess-16-2311-2012 * Zusammenfassung * * section 3 * ----- | 1-14 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 16. Januar 2018 | Kielhöfer, Patrick |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes
   Dokument

EPO FORM 1503 03.82 (P04C03)

Seite 2 von 2